# EUROPEAN PATENT APPLICATION

(11) **EP 4 471 353 A1**
(43) Date of publication of application: **04.12.2024**
(21) Application number: 24178306.7
(22) Date of filing: 27.05.2024
(51) Int. Cl.: F24S 25/10, F24S 25/16, F24S 25/20, F24S 25/60, H02S 20/20, H02S 20/23, F24S 25/00

(54) **MOUNTING SYSTEM FOR PHOTOVOLTAIC PANELS COMPRISING A MULTIPURPOSE BRACKET**

(30) Priority: 30.05.2023 IT 202300002313 U; 10.08.2023 IT 202300017082
(71) Applicant: GB Solar Srl, 70123 Bari (BA) (IT)
(72) Inventor: COLONNA, ANGELO, ALTAMURA (BA) (IT)
(74) Representative: Giuliano, Natalia

(57) **Abstract**

Mounting system for photovoltaic panels comprising:
- at least a photovoltaic panel;
- at least one ballast (3, 12, 13);
- at least two multipurpose brackets (1) for each ballast (3, 12, 13) configured to be fixed to them and for creating fixing points to fix the frame (21) of a photovoltaic panel having a short side L1 and a long side L2 on a flat surface;
wherein said multipurpose bracket (1) has a rectangular shape and is provided with at least one slot (1a) and at least two holes (1b, 1c) aligned to the slot (1a) and at least an anti-rotation protrusion (1d) on one end.

## Description

The present invention relates to a mounting system for photovoltaic panels comprising a multipurpose bracket.

In particular, the present invention relates to a mounting system comprising a bracket of the type used for installing a photovoltaic panel on a ballast-type support.

Various photovoltaic panel mounting systems and various brackets that can be used in ballast mounting are currently known.

In particular, fixing brackets comprising a plurality of slots suitable for housing bolts are known. However, currently known ballast brackets are not versatile or multipurpose, as they are not adaptable to different ballast models. Furthermore, currently known brackets do not allow immediate and precise stable fixing when mounting a photovoltaic panel.

The purpose of the present invention is to provide a mounting system for photovoltaic panels comprising a multipurpose bracket that is effective and optimized.

According to the present invention, a mounting system for photovoltaic panels is created comprising a multipurpose bracket, as defined in claim 1.

For a better understanding of the present invention, a preferred embodiment is now described, purely by way of nonlimiting example, with reference to the attached drawings, in which:
- figures 1.a-1.f show a mounting system for photovoltaic panels comprising a multipurpose bracket, according to a first use of the bracket, that is to allow blocking on the long side of a large module using additional ballast, according to the invention;
- figures 2.a-2.c respectively show a mounting system for photovoltaic panels comprising a multipurpose bracket, in a second use of the bracket which consists in the coupling of two lateral ballasts to increase the stabilizing load in areas with high wind load, according to the invention;
- figures 3.a-3.d show the mounting system in a third use of the bracket and in particular in the mounting of panels with vertical orientation and clamp locking on the frame of the long side of the panel, according to the invention;
- figures 4.a-4.c show the mounting system in a third use of the bracket and in particular in the mounting of panels with vertical orientation and clamp locking on the frame of the long side of the panel, according to the invention;
- figures 5.a-5.d show the mounting system in a fourth use of the bracket for mounting an optimizer, in which the bracket is placed on the rear part of the ballast, according to the invention;
- figures 6.a-6.d show the mounting system in a fifth way of using the bracket in the junction of two ballasts to form a sail, according to the invention;
- figures 7.a-7.b show the mounting system in another system of simultaneous mounting of the optimizer and the upwind bar, according to the invention;
- figures 8.a-8.b show a multipurpose bracket, from above and in perspective respectively, according to the invention;
- figures 9.a-9.e show a fixing system comprising a multipurpose bracket and a lower bracket, according to the invention;
- figures 10.a-10.c show a fixing system comprising a multipurpose bracket and an angular bracket, according to the invention.

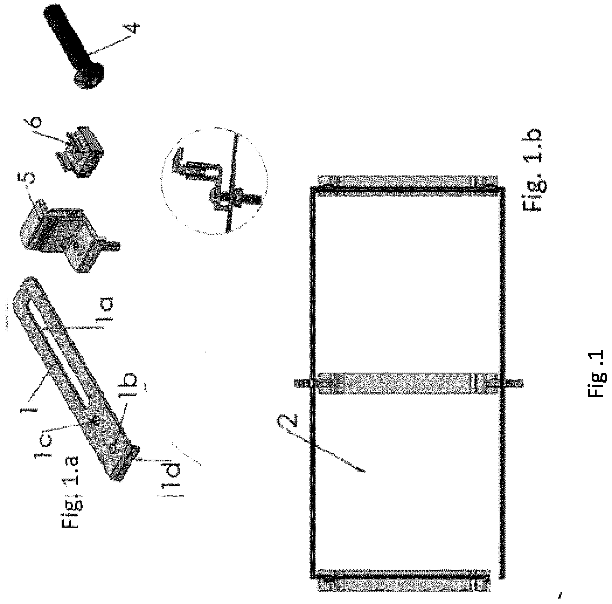

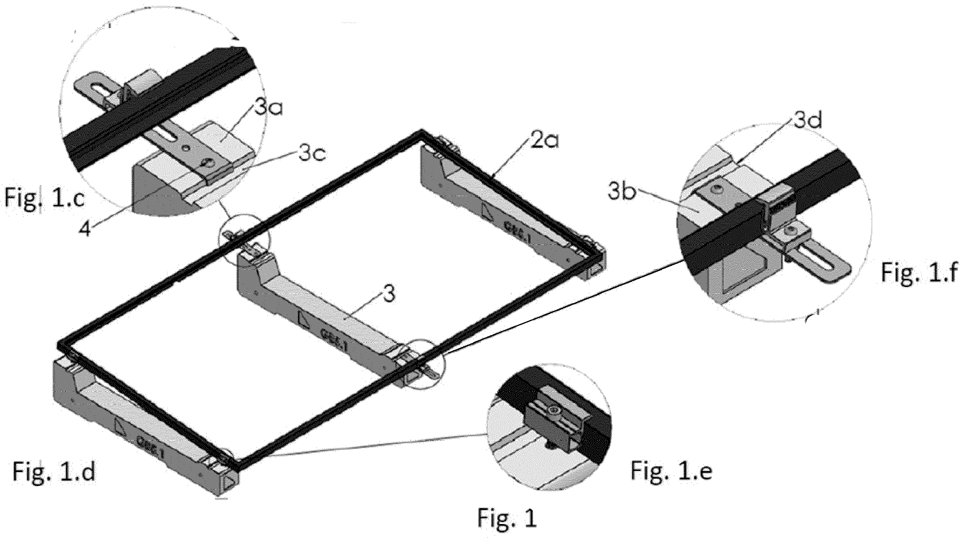

With reference to these figures, and in particular to figure 1, a mounting system for photovoltaic panels comprising a multipurpose bracket is shown, according to the invention.

A mounting system for photovoltaic panels to which the multipurpose bracket 1 can be applied is suitable for mounting at least one panel, having a frame, a shorter side or short side L1 and a longer side or long side L2, on a flat surface, like a roof or the ground, as examples.

The mounting system comprises:
- at least a photovoltaic panel;
- at least one ballast block 3, 12, 13 and at least two multipurpose brackets 1, an upper longitudinal metal bracket and a lower longitudinal metal bracket for each ballast block, preferably made of steel, suitable for creating fixing points for the photovoltaic panel.

The ballast block is generally made of concrete conglomerate and has a lower surface configured in such a way as to allow stable support on a flat base surface, and an upper inclined support surface for a photovoltaic panel that can be secured using metal profiles and appropriate fixing means. Each ballast block has an upper surface inclined at a predetermined and variable angle relative to its horizontal lower surface.

In more detail, a multipurpose bracket 1, comprised in the mounting system according to the invention, is equipped with:
- one slot 1a;
- two substantially circular holes 1b, 1c; And
- a bend or protrusion 1d on one end, designed to avoid rotation, ensuring stable fixing.

In particular, the bracket 1 has a substantially rectangular shape, in which the slot 1a and the two holes 1b, 1c, are aligned with each other and placed along the line of longitudinal symmetry of the slot itself.

The fold or protrusion 1d is located at one end of the bracket 1 opposite to the slot 1a, corresponding to one of its shorter sides.

Preferably the slot 1a has a length comprised between 100mm and 130mm and even more preferably equal to 117,70 mm. The slot 1a advantageously allows you to accommodate an M8 cage nut for fixing accessories, allowing a wide range of adjustment.

The bracket 1 preferably has a length comprised between 200 mm and 240 mm, even more preferably equal to 216 mm and a width equal to 40 mm.

It's possible to insert a bolt in each of the holes. Preferably, each hole has a diameter comprised between 5 mm and 10 mm, preferably equal to 8.5 mm.

The multipurpose bracket 1 is advantageously suitable for carrying out different types of installation of a module 2 on each ballast model of the Applicant.

A first and main use of the bracket 1 is shown in fig. 1 and consists in allowing the blocking on the long side of a large module 2 using an additional ballast. The ballast comprises an upper inclined surface 3a, a lower inclined surface 3b and threaded bushing.

Two multipurpose identical brackets 1 are mounted on the additional ballast 3, in correspondence of the upper inclined surface 3a and the lower inclined surface 3b of the additional ballast 3.

The bracket 1 is fixed on the ballast by means of a bolt 4 which couples, through a hole 1b, to the threaded bush on the ballast.

The projection 1d present at the end of the bracket 1 is configured to be coupled with the groove 3c, 3d present on the ballast 3. This coupling is crucial for the stability of the bracket 1, preventing its rotation when tightening the screw 4 or assembling the clamp 5.

Said clamp 5 is coupled to the slot of the bracket 1a via a cage nut 6: the slot allows you to adjust the position of the clamp ensuring perfect adhesion to the frame 2a of the panel 2.

The stability of the panel is ensured by the coupling between the protrusion, or toothed projection 1d, and the groove 3c, 3d. The bracket, always remaining fixed, guarantees the perfect locking operation of the clamp 5 even when subjected to strong load stresses due to the wind.

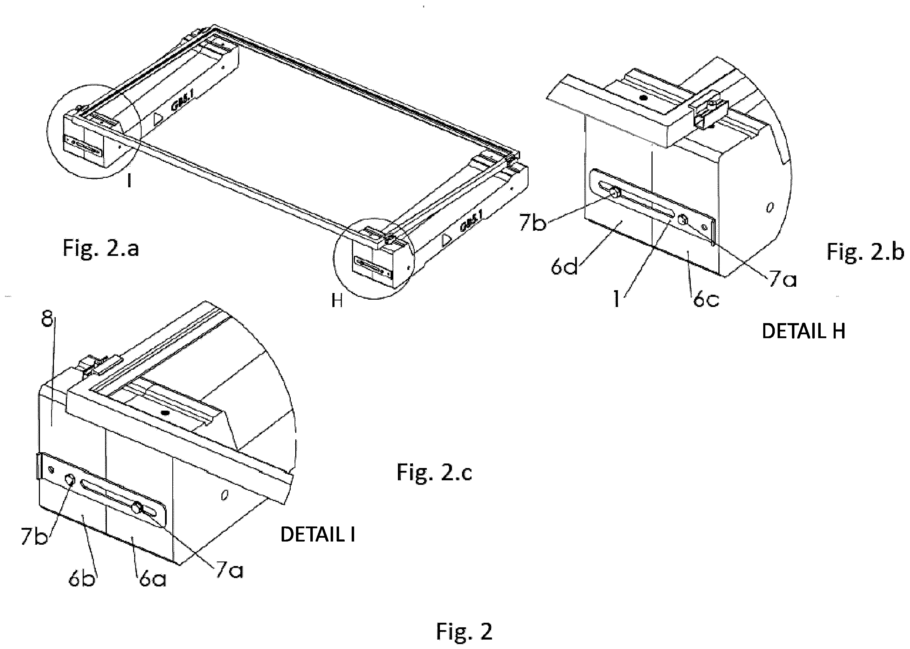

A second use of the bracket 1 is shown in figure 2. It consists in the coupling of two lateral ballasts 6a, 6b, 6c, 6d to increase the stabilizing load in areas with high wind load.

The bracket 1 is fixed to the two ballasts 6a, 6b, 6c, 6d using two bolts 7a, 7b which couple with the two respective bushes present on the rear surface 8 of each ballast.

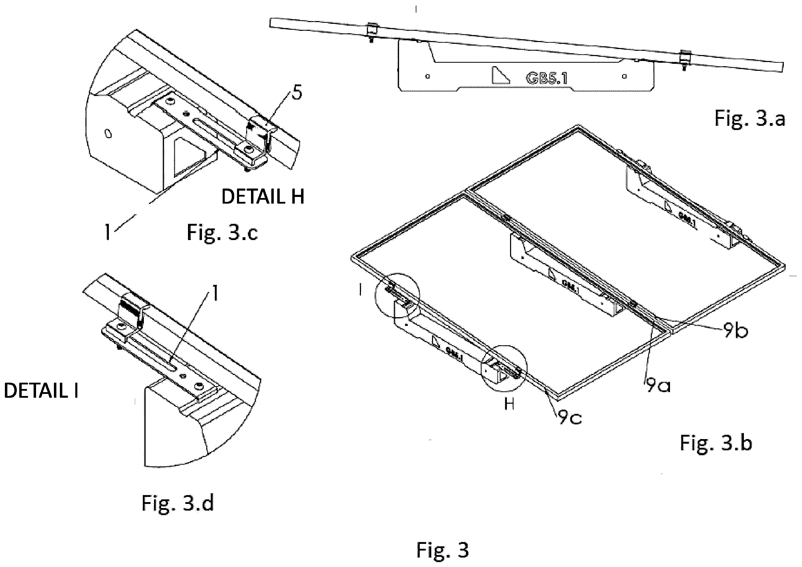

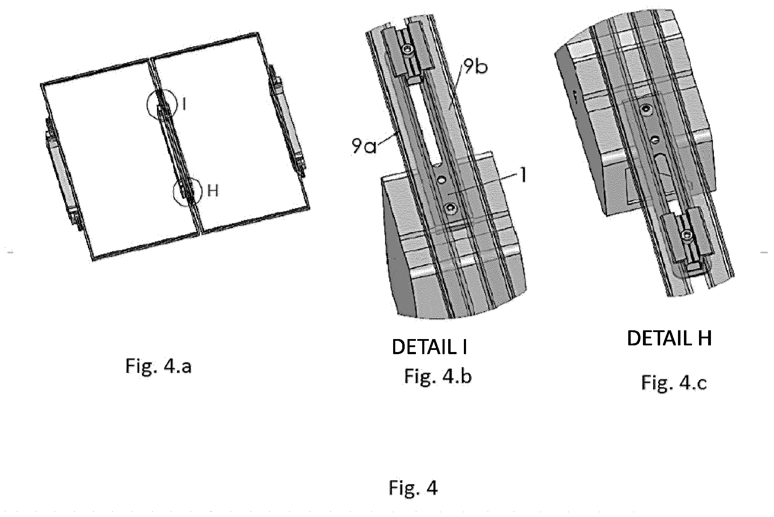

A third use of bracket 1 is shown in figure 3 and figure 4 and is characterized by the assembly of panels with vertical orientation and locking of the clamps 5 on the frame of the long side of the panel 9a, 9b, 9c. The coupling of the bracket 1 with the ballast 3 occurs as already described in the first case.

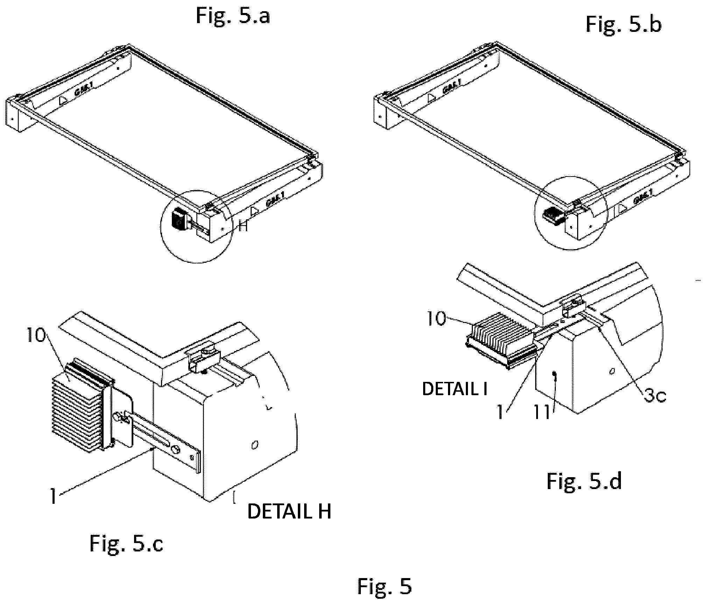

A fourth use of the bracket 1 is shown in figure 5, and is due to the mounting of an optimizer 10 by positioning bracket 1 on the rear part of the ballast. The bracket 1 can be mounted both on the upper rear part of the ballast (detail I) and on the rear vertical surface (detail H) by means of a bolted coupling with the bush 11 present on the rear side of the ballast.

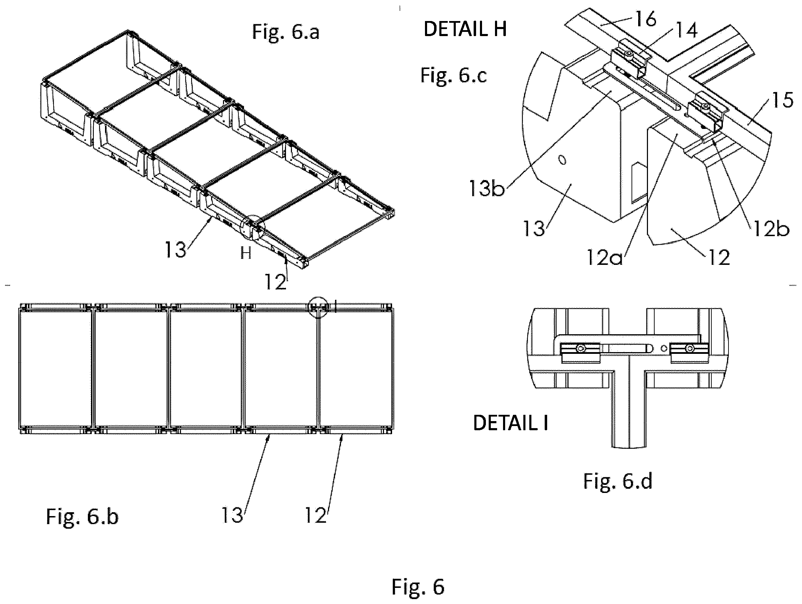

A fifth functionality of the bracket 1 is represented by the joining of two ballasts (as shown in figure 6) to form a sail.

In this case the bracket 1 is fixed on the upper inclined surface 12a of the front ballast 12 and on the lower inclined surface 13b of the rear ballast 13.

The bracket 1 (detail H) is fixed with two bolts of the clamps 14 in the respective bushings present on the inclined surfaces of the two ballasts. The protruding end 1d of the bracket 1 mates with the groove 12b on the front ballast. The frames of two adjacent panels 15, 16 rest directly on the bracket 1.

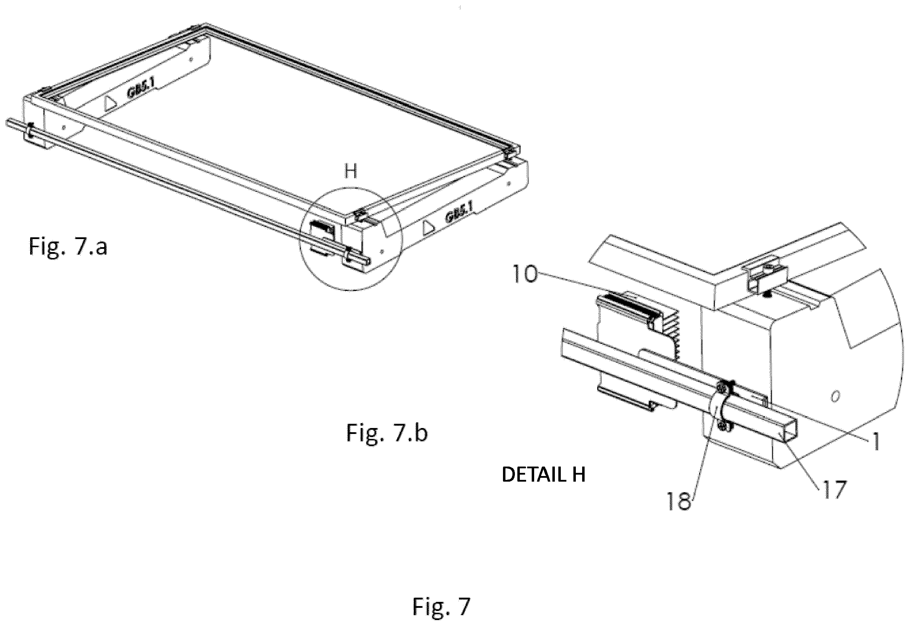

Figure 7 shows another system of simultaneous assembly of the optimizer 10 and the brace bar 17. In this case, a collar 18 is used to secure both the bracket 1 and the brace 17.

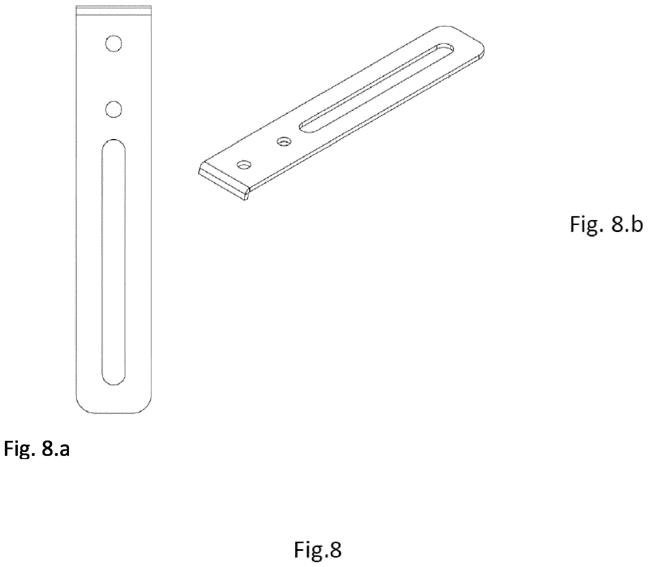

Figure 8 shows the multipurpose bracket 1, from above and in perspective.

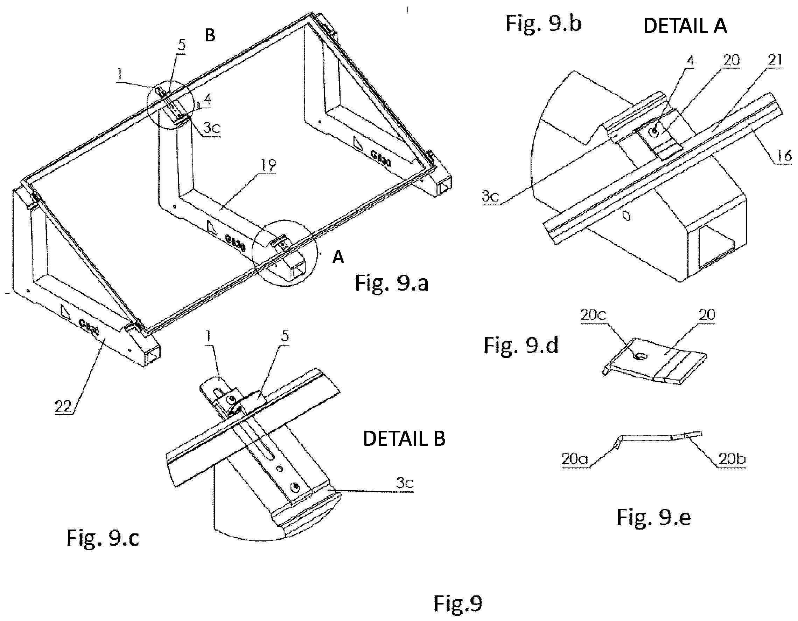

In particular, for those ballast models with high inclinations, such as a ballast 22 having an inclination of 30°, in order to allow the assembly of large panels with a short side length of less than 1200 mm, two brackets 1, 20 are used in correspondence of the long side of the panel. The assembled configuration (figure 9) of the single panel is composed of three identical ballast blocks comprising two lateral ballasts 22a and a central ballast 19.

In this case the panel is blocked at six points: 4 on the short sides, 2 on the long sides.

The rear central bracket 1 is fixed by a bolt 4 to the high inclined surface of the ballast: the panel frame is locked using one end clamp 5.

The front center lower bracket 20 is fixed by means of a bolt 4 to the low sloping surface of the ballast.

The lower bracket 20 is composed of a first front fin 20a which mates with the groove 3c present on the lower part of the ballast 19. The same lower bracket 20 also has a rear inclined fin 20b which couples with the frame 21 of the panel. In detail, the lower bracket 20 is pre-assembled on the ballast together with the bracket 1, then the panel is placed on the three ballasts and is moved upwards until the point where the frame comes into contact with the lower surface of the flap 20b. Then the clamp 5 of the rear central bracket 1 and the four clamps on the short side are tightened.

According to an aspect of the invention, as shown in figure 9, in particular when the panel has a short side measuring less than 1200 mm, the mounting system for photovoltaic panels comprises on the long side of the panel, in addition to the multipurpose bracket 1, also at least one lower bracket 20, for fixing the panel to three identical ballasts 22a, 19, respectively two lateral ballasts 22a and a central ballast 19.

According to an aspect of the invention, the mounting system for photovoltaic panels comprises a lower bracket 20, suitable for being placed on the long side of the panel together with the bracket 1, said lower bracket 20 comprising:
- in its front portion an upper fin 20a configured to couple with a groove in the lower part of a central ballast 19;
- a rear inclined fin 20b suitable for being coupled with the frame 21 of the panel.

In use, the lower bracket 20 is pre-assembled on each ballast together with the bracket 1, to then place the panel on three ballasts and move it upwards until the frame comes into contact with the lower surface of the lower fin 20b.

According to an aspect of the invention, the mounting system for photovoltaic panels comprises a lower bracket 20 suitable for being connected at the top to a groove 3c obtained in an inclined portion of the ballast, and to the frame 21 of the panel, called lower bracket 20 having in section a flat central portion, centrally comprising a hole 20c, an upper fin 20a placed at a first end of the flat portion and inclined downwards, and a lower fin 20b inclined towards the top, to accommodate and block the frame 21, located at a second end of the central portion.

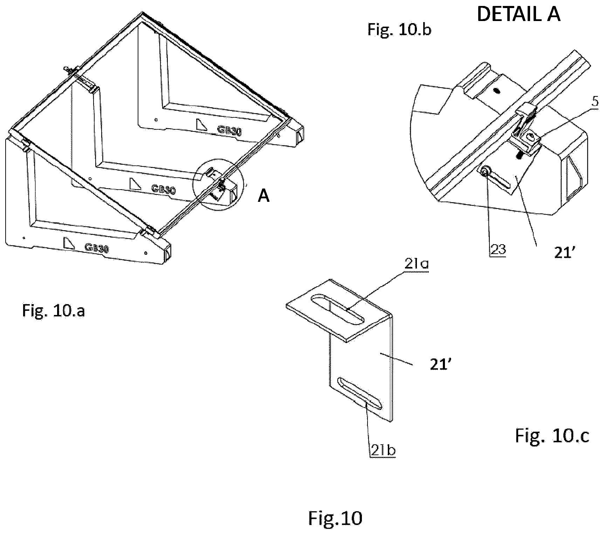

An alternative solution shown in figure 10 is given by an angular bracket 21' which is fixed on the lateral surface 24 of a central ballast 19 by means of a bolted connection 23. The corner bracket 21' has a lower slot 21b necessary to adjust the position of the bracket and an upper slot 21a useful for adjusting the position of the clamp 5.

After fixing the bracket 21', the clamp 5 is pre-assembled and then the panel is installed which is brought into contact with the vertical surface 5a of the clamp 5. Then the panel is fixed on the long side by first tightening the clamp 5 after adjusting its position on the rear central bracket 1. The clamp 5 on the front bracket 21' and the four clamps on the two short sides are then tightened.

According to one aspect of the invention, as shown in Figure 10, the mounting system for photovoltaic panels comprises an angular bracket 21' attachable to the side surface 24 of a central ballast 19 by means of a bolted connection 23, said angular bracket 21' comprising a lower slot 21b suitable for adjusting the position of the clamp 5.

According to an aspect of the invention, the mounting system for photovoltaic panels comprises an angular bracket 21' substantially L-shaped, comprising on a first flat surface portion a first slot 21a and on a second flat, orthogonal portion to the first, a second slot 21b.

Advantageously, the mounting system for photovoltaic panels comprising a multipurpose bracket according to the invention is versatile, simple and stable.

Finally, it is clear that modifications and variations can be made to the mounting system for photovoltaic panels comprising a multipurpose bracket described and illustrated here without and the protective scope of the present invention, as defined in the attached claims.

## Claims

1. Mounting system for photovoltaic panels comprising:
- at least a photovoltaic panel;
- at least one ballast (3, 12, 13);
- at least two multipurpose brackets (1) for each ballast (3, 12, 13) configured to be fixed to them and for creating fixing points to fix the frame (21) of a photovoltaic panel having a short side L1 and a long side L2 on a flat surface;
**characterized in that** said multipurpose bracket (1) has a rectangular shape and is provided with at least one slot (1a) and at least two holes (1b, 1c) aligned to the slot (1a) and at least an anti-rotation protrusion (1d) on one end.

2. Mounting system for photovoltaic panels comprising a multipurpose bracket according to claim 1, **characterized in that** the protrusion (1d) is placed at one end of the bracket (1) opposite the slot (1a), corresponding to one of its minor sides.

3. Mounting system for photovoltaic panels comprising a multipurpose bracket according to claim 1, **characterized in that** the slot (1a) has a length between 100 mm and 130 mm.

4. Mounting system for photovoltaic panels comprising a multipurpose bracket according to claim 1, **characterized in that** said bracket (1) has a length between 200 mm and 240 mm, and each hole (1b, 1c) has a diameter between 5 mm and 10 mm.

5. Mounting system for photovoltaic panels comprising a multipurpose bracket according to claim 1, **characterized in** comprising an additional ballast (3) comprising an upper inclined surface (3a), a lower inclined surface (3b), at least two grooves (3c, 3d) and threaded bushing, the upper inclined surface (3a) being configured to mount a first bracket (1) and the lower inclined surface (3b) being configured to mount a second bracket (1), each bracket (1) being fixed on the ballast (3) by means of a bolt (4) which couples, through the hole (1b), to the threaded bushing present on the ballast (3) in such a way that the protrusion (1d) is coupled with the grooves (3c, 3d) .

6. Mounting system for photovoltaic panels comprising a multipurpose bracket according to claim 1, **characterized in** comprising two lateral ballasts (6a, 6b, 6c, 6d) each comprising a rear surface (8) comprising to bushings and two bolts (7a, 7b) fixing the bracket (1) with the two respective bushings present on the rear surface (8).

7. Mounting system for photovoltaic panels comprising a multipurpose bracket according to claim 1, **characterized in that** the photovoltaic panel has a vertical orientation and a frame (9a, 9b, 9c) on the long side of the panel on which clamping means (5) are configured to be locked.

8. Mounting system for photovoltaic panels comprising a multipurpose bracket according to claim 1, **characterized in that** said bracket (1) is applied to the rear part of the ballast (3, 12, 13).

9. Mounting system for photovoltaic panels comprising a multipurpose bracket according to claim 1, **characterized in** comprising a front weight (12) having an upper inclined surface (12a) and a rear weight (13) having a lower inclined surface (13b) configured to fix the bracket (1) to two additional ballasts.

10. Mounting system for photovoltaic panels comprising a multipurpose bracket according to claim 1, **characterized in** comprising an optimizer (10) and a brace bar (17) assembled together by means of the bracket (1) and further comprising a collar (18) configured for fixing the bracket (1) to the brace bar (17).

11. Mounting system for photovoltaic panels comprising a multipurpose bracket according to claim 1, **characterized in that** said photovoltaic panel has a short side measuring less than 1200 mm.

12. Mounting system for photovoltaic panels comprising a multipurpose bracket according to claim 1, **characterized in** comprising a lower bracket (20) and a central ballast (19), the lower bracket (20) being configured for being placed on the long side of the panel together with the bracket (1), said lower bracket (20) comprising:
- in its front portion an upper fin (20a) designed to couple with a groove in the lower part of the central ballast (19);
- a rear inclined fin (20b) suitable for being coupled with the frame (21) of the photovoltaic panel;
in use the bracket (20) being pre-assembled on each ballast together with the bracket (1).

13. Mounting system for photovoltaic panels comprising a multipurpose bracket according to claim 1, **characterized in** comprising two lateral ballasts (22a) configured to cooperate with the central ballast (19) for fixing the photovoltaic panel for fixing with the two lateral ballasts (22a) and the central ballast (19) by means of two brackets (1, 20) placed on its long side.

14. Mounting system for photovoltaic panels comprising a multipurpose bracket according to the previous claims, **characterized in that** the lower bracket (20) is configured for being placed on the long side of the panel together with the bracket (1) and in comprising:
- a flat portion at which end an upper fin (20a) is placed and configured for coupling with a groove in the lower part of the central ballast (19);
- a rear inclined fin (20b) configured for being coupled with the frame (21) of the photovoltaic panel;
- centrally including a hole (20c) and a lower flap (20b) inclined upwards, to accommodate and block the frame (21), placed at a second end of the flat portion;
in use the bracket (20) being pre-assembled on each ballast together with the bracket (1).

15. Mounting system for photovoltaic panels comprising a multipurpose bracket according to claim 1, **characterized in that** the lower bracket (20) is configured for being connected at the top to the groove (3c) and to the frame (21) of the panel, said lower bracket (20) having in section a flat central portion, centrally including a hole (20c), an upper tab (20a) placed at a first end of the flat portion inclined downwards, and a lower flap (20b) inclined upwards, to accommodate and block the frame (21), placed at a second end of the central portion.

16. Mounting system for photovoltaic panels comprising a multipurpose bracket according to previous claims, **characterized in** comprising an angular bracket (21') attachable to the lateral surface (24) of the central ballast (19) by means of a bolted connection (23), said angular bracket (21') comprising a lower slot (21b) suitable for adjusting the position of the clamp (5).

17. Mounting system for photovoltaic panels comprising a multipurpose bracket according to previous claims, **characterized in that** the angular bracket (21') is L-shaped and comprises on a first flat surface portion a first slot (21a) and on a second flat portion, orthogonal to the first, a second slot (21b).
